# EUROPÄISCHE PATENTANMELDUNG

(11) **EP 4 180 183 A1**
(43) Veröffentlichungstag der Anmeldung: **17.05.2023**
(21) Anmeldenummer: 21208112.9
(22) Anmeldetag: 15.11.2021
(51) Int. Cl.: B25F 5/00, H02P 7/03, H02P 29/032, B23D 47/12, B24B 23/02

(54) **WERKZEUGMASCHINE MIT EINEM WERKZEUG UND VERFAHREN ZUR ERKENNUNG EINER DREHRICHTUNG DES WERKZEUGS**

(71) Anmelder: Hilti Aktiengesellschaft, 9494 Schaan (LI)
(72) Erfinder: Keller, Christian, 86947 Petzenhausen (DE); Engler, Torsten, 82211 Herrsching (DE)
(74) Vertreter: Hilti Aktiengesellschaft Corporate Intellectual Property

(57) **Zusammenfassung**

Die vorliegende Erfindung betrifft eine Werkzeugmaschine mit einem Werkzeug, wobei das Werkzeug von einem Elektromotor angetrieben werden kann, wobei die Werkzeugmaschine einen Stromfluss erfassen und mit einem erwarteten Wert für den Stromfluss vergleichen kann, wobei die Werkzeugmaschine deaktiviert werden kann, wenn eine Abweichung zwischen dem erfassten Stromwert und dem erwarteten Wert für den Stromfluss ermittelt wird. In einem zweiten Aspekt betrifft die Erfindung ein Verfahren zur Erkennung einer Drehrichtung eines Werkzeugs einer Werkzeugmaschine, wobei ein Stromfluss erfasst und mit einem erwarteten Wert für den Stromfluss verglichen werden und die Werkzeugmaschine deaktiviert wird, wenn eine Abweichung zwischen dem erfassten Stromwert und dem erwarteten Wert für den Stromfluss ermittelt wird.

## Beschreibung

Die vorliegende Erfindung betrifft eine Werkzeugmaschine mit einem Werkzeug, wobei das Werkzeug von einem Elektromotor angetrieben werden kann, wobei die Werkzeugmaschine einen Stromfluss erfasst und mit einem erwarteten Wert für den Stromfluss vergleicht, wobei die Werkzeugmaschine deaktiviert werden kann, wenn eine Abweichung zwischen dem erfassten Stromwert und dem erwarteten Wert für den Stromfluss ermittelt wird. In einem zweiten Aspekt betrifft die Erfindung ein Verfahren zur Erkennung einer Drehrichtung eines Werkzeugs einer Werkzeugmaschine, wobei ein Stromfluss erfasst und mit einem erwarteten Wert für den Stromfluss verglichen werden und die Werkzeugmaschine deaktiviert werden kann, wenn eine Abweichung zwischen dem erfassten Stromwert und dem erwarteten Wert für den Stromfluss ermittelt wird.

### Hintergrund der Erfindung:

Im Bereich der Werkzeugmaschinen sind unter anderem Werkzeugmaschine mit scheibenförmigen Werkzeugen bekannt. Bei diesen Werkzeugmaschinen kann es sich beispielsweise um Trennschleifer, Sägen oder Trenngeräte handeln, deren Werkzeuge Trennscheiben oder Sägeblätter sind. Für einige dieser Typen von Werkzeugmaschinen gibt es zulassungsseitig Vorgaben hinsichtlich der Drehrichtung des Werkzeugs, um ein Verletzungsrisiko für einen Nutzer der Werkzeugmaschine zu reduzieren. Insbesondere kann sich das Werkzeug der Werkzeugmaschine im Uhrzeigersinn oder gegen den Uhrzeigersinn drehen. Es kann zum Beispiel vorgegeben sein, dass sich das Werkzeug der Werkzeugmaschine während des Betriebs und der Arbeit mit der Werkzeugmaschine in einer vorgegebenen Drehrichtung dreht und dass diese Drehrichtung während des Betriebs beibehalten wird. Anderenfalls kann es beispielsweise bei unsachgemäßer Handhabung oder bei ungünstigen äußeren Faktoren zu einer Gefährdung für den Nutzer kommen.

Üblicherweise weisen solche Werkzeugmaschinen mit scheibenförmigen Werkzeugen Drehzahl- und/oder Drehrichtungssensoren auf, mit denen die Drehrichtung des Werkzeugs der Werkzeugmaschine während ihres Betriebs festgestellt werden kann.

Nachteilig an dem Einsatz solcher Drehzahl- und/oder Drehrichtungssensoren ist allerdings, dass ihre Integration häufig mechanisch recht aufwändig ist und zusätzliche Schnittstellen und Leitungen erfordert. Darüber hinaus kann es erforderlich sein, dass am Motor der Werkzeugmaschine spezielle Vorkehrungen dafür getroffen werden, dass eine Abtastung der Drehrichtung bzw. der Drehzahl ermöglicht wird. Diese Vorkehrungen können beispielsweise darin bestehen, dass Magnetringe und/oder Hall-Sensoren im Bereich der Peripherie des Motors der Werkzeugmaschine vorgesehen sind. Diese zusätzlichen Komponenten der Werkzeugmaschine und ihres Motors stehen aber dem grundsätzlichen Interesse bei der Geräte-Entwicklung entgegen, vor allem im Bereich der Werkzeugmaschine, bei denen Arbeiter zum Teil über sehr lange Zeiträume mit den Geräten arbeiten, leichte, kompakte und handliche Werkzeugmaschinen bereitzustellen.

Die Aufgabe, die der vorliegenden Erfindung zugrunde liegt, besteht darin, die vorstehend beschriebenen Mängel und Nachteile des Standes der Technik zu überwinden und eine Werkzeugmaschine und ein Verfahren zur Erkennung einer Drehrichtung eines Werkzeugs einer Werkzeugmaschine bereitzustellen, wobei die Anzahl der Komponenten der Werkzeugmaschine gering gehalten werden soll, um eine leichte, kompakte und handliche Werkzeugmaschine bereitstellen zu können.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Werkzeugmaschine vorgesehen, wobei die Werkzeugmaschine einen Elektromotor und eine Motorelektronik, sowie ein Werkzeug umfasst und wobei das Werkzeug von dem Elektromotor zu einer Rotationsbewegung angetrieben werden kann. Die Motorelektronik der Werkzeugmaschine ist dazu eingerichtet, einen Stromfluss durch einen Strommesswiderstand zu erfassen und mit einem erwarteten Wert für den Stromfluss zu vergleichen, wobei die Motorelektronik dazu eingerichtet ist, die Werkzeugmaschine zu deaktivieren, wenn eine Abweichung zwischen dem erfassten Stromwert und dem erwarteten Wert für den Stromfluss ermittelt wird.

Im Stand der Technik hat sich gezeigt, dass die Werkzeuge einiger konventioneller Werkzeugmaschine manchmal und allen Anstrengungen, dies zu verhindern, zum Trotz, mit der falschen Drehrichtung rotieren. Dies kann ein erhebliches Sicherheitsrisiko für den Nutzer der Werkzeugmaschine darstellen. Ein wesentlicher Vorteil der vorgeschlagenen Werkzeugmaschine besteht darin, dass eine etwaige unerwünschte Drehrichtung innerhalb von wenigen Drehungen erkannt und gestoppt werden kann, indem die Werkzeugmaschine deaktiviert wird. Dadurch kann der Nutzer wirksam vor Verletzungen geschützt werden.

Der Begriff "Stromfluss" umfasst im Kontext der vorliegenden Erfindung bevorzugt einen Betrag des Stromflusses, der im Sinne der Erfindung als "Stromwert" bezeichnet werde. Darüber hinaus wird der bei der Erfassung des Stromflusses auch das Vorzeichen des Stromes durch den Motor der Werkzeugmaschine erfasst.

Somit bedeutet die Formulierung, dass "ein Stromfluss erfasst" wird, im Sinne der Erfindung bevorzugt, dass sowohl ein Stromwert, als auch sein Vorzeichen erfasst werden. Die Erfassung erfolgt vorzugsweise durch die Motorelektronik, wobei die Motorelektronik für den Zweck dieser Erfassung insbesondere einen Strommesswiderstand aufweisen kann. Das Vorzeichen des Stromflusses kann im Sinne der Erfindung bevorzugt als Indikator für die Richtung des Stromflusses durch einen Strommesswiderstand ("Shunt") betrachtet werden, wobei die Richtung des Stromflusses durch den Motor darüber hinaus Aussagen über die Drehrichtung des Werkzeugs der Werkzeugmaschine erlaubt. In einem bevorzugten Ausführungsbeispiel betrifft die vorliegende Erfindung eine Werkzeugmaschine mit einem Werkzeug, wobei die Werkzeugmaschine einen Stromfluss und sein Vorzeichen erfassen und mit einem erwarteten Wert für den Stromfluss vergleichen kann, wobei die Werkzeugmaschine deaktiviert wird, wenn eine Abweichung zwischen dem erfassten Stromwert und seinem Vorzeichen und dem erwarteten Wert für den Stromfluss ermittelt wird.

Vorzugsweise kann die Werkzeugmaschine von ihrer Motorelektronik deaktiviert werden, wenn in Abhängigkeit von dem Vergleich der Stromwerte eine andere als eine vorgegebene Drehrichtung des Werkzeugs ermittelt wird. Es ist im Sinne der Erfindung bevorzugt, dass angenommen wird, dass das Werkzeug der Werkzeugmaschine in der vorgegebenen und "richtigen" Drehrichtung rotiert, wenn der erfasste Stromwert und sein Vorzeichen mit dem erwarteten Stromwert übereinstimmen oder im Wesentlichen übereinstimmen. Eine (im Wesentlichen) Übereinstimmung der Werte bedeutet im Sinne der Erfindung bevorzugt, dass der erfasste Stromwert und sein Vorzeichen im Wesentlichen zu +/- 10 % mit dem erwarteten Stromwert übereinstimmen, wobei der Prozentbereich von 90 bis 110 % einen Zielkorridor für den Stromwert bildet. Der Zielkorridor kann beispielsweise auch dadurch bestimmt werden, dass ein positiver und ein negativer Strom addiert werden, wobei die Summe erwartungsgemäß im Bereich von null liegt. Darüber hinaus kann der Zielkorridor vorzugsweise auch Toleranzabweichungen umfassen. Wenn der erfasste Stromwert und sein Vorzeichen in dem Zielkorridor liegen, wird vorzugsweise davon ausgegangen, dass sich das Werkzeug der Werkzeugmaschine in der "richtigen", d.h. der vorgegebenen Drehrichtung bewegt. Wenn der Vergleich von erfasstem Stromwert und seinem Vorzeichen mit dem erwarteten Stromwert eine Abweichung ergibt, wird davon ausgegangen, dass sich das Werkzeug der Werkzeugmaschine nicht in der "richtigen" Drehrichtung bewegt, sondern in einer "falschen" Drehrichtung, die der "richtigen" Drehrichtung entgegengesetzt ist. Wenn eine solche Abweichung des erfassten Stromwerts und seines Vorzeichens von dem erwarteten Stromwert bzw. dem Zielkorridor ermittelt wird, ist die Motorelektronik der Werkzeugmaschine dazu eingerichtet, die Werkzeugmaschine zu deaktivieren, d.h. sie auszustellen. Das kann beispielsweise dadurch erfolgen, dass der Motor nicht mehr mit elektrischer Energie bzw. Strom versorgt wird. Dadurch kann vorzugsweise auch erreicht werden, dass sich das Werkzeug der Werkzeugmaschine nicht mehr dreht, so dass keine Gefahr mehr für einen Nutzer der Werkzeugmaschine ausgeht.

Bei den Stromwerten, die von der Motorelektronik erfasst und ausgewertet werden, handelt es sich vorzugsweise um die Ströme bzw. um die Stromflüsse, die durch den Motor bzw. durch die Wicklungen des Elektromotors fließen. Der Elektromotor der Werkzeugmaschine kann vorzugsweise in zwei Stromrichtungen durchflossen werden, wobei im Kontext der vorliegenden Erfindung davon ausgegangen wird, dass eine Stromflussrichtung A durch den Motor einer Drehrichtung A des Werkzeugs der Werkzeugmaschine entspricht, während eine Stromflussrichtung B durch den Motor der Werkzeugmaschine einer Drehrichtung B des Werkzeugs entspricht. Beispielsweise kann sich das Werkzeug der Werkzeugmaschine im Uhrzeigersinn drehen, wenn es in Drehrichtung A rotiert und der Strom in Flussrichtung A durch den Motor bzw. seinen Wicklungen fließt, während sich das Werkzeug gegen den Uhrzeigersinn drehen kann, wenn das Werkzeug in Drehrichtung B rotiert und der Strom in Flussrichtung B durch den Motor bzw. seinen Wicklungen fließt.

Es ist im Sinne der Erfindung bevorzugt, dass der Strom bzw. seine Richtung das Drehmoment des Motors der Werkzeugmaschine bestimmt. Vorzugsweise kann das Drehmoment die Drehrichtung des Motors bestimmen bzw. festlegen. Es kann aber im Sinne der Erfindung auch bevorzugt sein, dass Drehrichtung und Drehmoment des Motors bzw. der Strom durch den Strommesswiderstand entgegengesetzte Vorzeichen haben. Diese Situation kann beispielsweise beim aktiven Abbremsen der Werkzeugmaschine auftreten.

Es ist im Sinne der Erfindung bevorzugt, dass der Strom, der durch den Motor der Werkzeugmaschine fließt, üblicherweise die gleiche Richtung und den gleichen Betrag hat, sowohl beim Beschleunigen, als auch beim Rekuperieren, wenn sich der Motor der Werkzeugmaschine in der "richtigen" Drehrichtung dreht. Der Strom durch den Shunt kann beim Beschleunigen beispielsweise positiv und beim Rekuperieren beispielsweise negativ sein, so dass eine Summe aus beidem Strömen circa in einem Bereich von 0 Ampère liegt. Wenn sich der Motor der Werkzeugmaschine in der "falschen" Drehrichtung dreht, hat der Strom durch den Motor der Werkzeugmaschine üblicherweise die "falsche" Richtung und den "falschen" Betrag, was vorzugsweise sowohl beim Beschleunigen, als auch beim Rekuperieren gilt.

Vorteilhafterweise kann mit der Erfindung eine Erkennung der Drehrichtung des Werkzeugs der Werkzeugmaschine ermöglicht werden, wobei die Richtungserkennung insbesondere auf Basis der vorhandenen Strommessung erfolgt. Dazu kann in der Werkzeugmaschine ein Strommesswiderstand ("Shunt") vorgesehen sein, mit dem der Strom und sein Vorzeichen erfasst werden können. Vorzugsweise erfolgt die Erfassung des Stromwerts und seines Vorzeichens mit einem Strommesswiederstand. Mit anderen Worten ist der Strommesswiderstand dazu eingerichtet, einen Stromwert und sein Vorzeichen zu erfassen, wobei die erfassten Stromwerte und Vorzeichen in der Motorelektronik der Werkzeugmaschine ausgewertet werden können. Die Auswertung besteht insbesondere in einem Vergleich zwischen den erfassten Stromwerten und ihren Vorzeichen mit erwarteten Werten für den Strom. Wenn die Stromwerte und ihre Vorzeichen in dem Zielkorridor des erwarteten Stromwerts liegen, kann die Werkzeugmaschine weiter betrieben werden. Anderenfalls kann die Werkzeugmaschine von der Motorelektronik abgeschaltet werden, um Sicherheitsanforderungen zu genügen und eine Gefährdung des Nutzers wirksam auszuschließen.

Es stellt einen wesentlichen Vorteil der Erfindung dar, dass mit der Erfindung eine Werkzeugmaschine bereitgestellt werden kann, die vorteilhafterweise dazu eingerichtet ist, die Drehrichtung des Werkzeugs der Werkzeugmaschine zu erkennen, ohne dass zusätzliche Drehzahlsensoren und/oder Drehrichtungssensoren erforderlich sind. Mit anderen Worten kommt die vorgeschlagene Werkzeugmaschine ohne zusätzliche Drehzahlsensoren und/oder Drehrichtungssensoren aus, so dass aufgrund der Erfindung eine besonders leichte, kompakte und handliche Werkzeugmaschine bereitgestellt werden kann. Vorteilhafterweise kann die Erkennung der Drehrichtung des Werkzeugs der Werkzeugmaschine verwendet werden, um die Drehrichtung des Werkzeugs zu überwachen. Tests haben gezeigt, dass dieser Vorteil insbesondere für Werkzeugmaschine mit bürstenbehafteten Gleichstrommotoren bedeutsam ist, die bisher üblicherweise mit mindestens zwei Drehzahlsensoren und/oder Drehrichtungssensoren ausgestattet waren, um die Drehrichtung des Werkzeugs der Werkzeugmaschine zu überwachen. Die vorgeschlagene Werkzeugmaschine kommt darüber hinaus ohne aufwändige Schnittstellen oder Leitungen für solche Drehzahlsensoren und/oder Drehrichtungssensoren aus, so dass weiter Bauraum eingespart werden kann im Vergleich zu konventionellen Werkzeugmaschinen, wie sie aus dem Stand der Technik bekannt sind.

Die Werkzeugmaschine umfasst einen Elektromotor, der beispielsweise bürstenbehaftet ausgebildet ist.

Beispielsweise kann der Elektromotor der Werkzeugmaschine als bürstenbehafteter Gleichstrommotor ausgebildet sein. Elektrische Energie zum Antrieb des Motors bzw. der Werkzeugmaschine kann von einer Batterie und/oder einem Akkumulator ("Akku") als Energieversorgungsvorrichtung bereitgestellt werden. Beispielsweise kann eine Gleichstrombatterie als Energieversorgungsvorrichtung der Werkzeugmaschine zum Einsatz kommen. Zur Steuerung u.a. der Energieversorgung des Motors der Werkzeugmaschine umfasst die Werkzeugmaschine eine Motorelektronik, die ihrerseits wiederum einen Microcontroller aufweisen kann.

Es ist im Sinne der Erfindung bevorzugt, dass die Motorelektronik der Werkzeugmaschine eine H-Brücke umfasst, wobei die H-Brücke vom Microcontroller der Motorelektronik angesteuert werden kann. Für die Ansteuerung der H-Brücke durch die Mikroelektronik bzw. ihren Microcontroller können Bedingungen und Regeln definiert werden, die in Abhängigkeit von einer Ansteuerungstopologie bzw. in Abhängigkeit von einem Ansteuerungskonzept der Werkzeugmaschine ausgewählt werden können.

Beispielsweise kann eines dieser Konzepte auf einer Vier-Quadrantenregelung basieren, bei der die H-Brücke bzw. der Motor der Werkzeugmaschine mit bis zu vier Treiberstufen angetrieben bzw. angesteuert werden können. Im Rahmen dieses Konzepts kann der Motor der Werkzeugmaschine mit einer Pulsweitenmodulation-Regelung ("PWM-Regelung") für die jeweilige Drehrichtung des Werkzeugs der Werkzeugmaschine angesteuert werden. Vorzugsweise kann eine Motorsteuerung der Werkzeugmaschine eine Pulsweitenmodulation umfassen bzw. eine Pulsweitenmodulation umsetzen. Es ist im Sinne der Erfindung ganz besonders bevorzugt, dass die Drehrichtung des Werkzeugs der Werkzeugmaschine mit einem Pulsweitenmodulation-Verhältnis angesteuert wird.

Bei der Pulsweitenmodulation kann die Ein-/Ausschaltdauer der einzelnen Schalter innerhalb der Brückenzweige der H-Brücke so moduliert werden, dass eine durch den Regelalgorithmus gewünschte mittlere Spannung am Motor der Werkzeugmaschine anliegt. Das Verhältnis zwischen Ein-/Ausschaltdauer der Schalter der H-Brücke wird im Sinne der Erfindung bevorzugt als "Pulsweitenmodulation-Verhältnis" bezeichnet.

Es ist im Sinne der Erfindung bevorzugt, dass der Strom zunächst in derselben Richtung durch eine Wicklung des Motors der Werkzeugmaschine fließt. Durch ein Umschalten der H-Brücke fließt der Strom durch einen Strommesswiderstand in abwechselnder Richtung, wobei der in den unterschiedlichen Richtungen gemessene Stromfluss vom Betrage her im Wesentlichen gleich oder ähnlich ist.

Der Strommesswiderstand kann vorzugsweise von einem Shunt gebildet werden oder einen solchen umfassen. Der Strommesswiderstand ist vorzugsweise dazu eingerichtet, den Stromfluss und sein Vorzeichen zu erfassen. Vorzugsweise ist der Strommesswiderstand Bestandteil des Motorelektronik der Werkzeugmaschine.

Es ist im Sinne der Erfindung bevorzugt, dass die Werkzeugmaschine bzw. ihre Motorelektronik einen Strommesswiderstand umfasst, wobei bei Umschalten der H-Brücke der Strom in abwechselnde Richtungen durch den Strommesswiderstand fließen kann. Mit anderen Worten kann die H-Brücke dazu eingerichtet sein, zu bewirken, dass der Strom durch den Strommesswiderstand in unterschiedliche Richtungen fließt.

Es ist im Sinne der Erfindung bevorzugt, dass die hier beschriebene Motoransteuerung durch die Motorelektronik bzw. ihren Microcontroller einen abwechselnden Stromfluss durch den Strommesswiderstand zeigt. Der Strom kann vorzugsweise dauerhaft oder permanent in beiden Bereichen des PWM-Verhältnisses erfasst werden, wobei diese Erfassung vorzugsweise mit Hilfe des Microcontrollers der Motorelektronik erfolgt. Insbesondere ist der Microcontroller mit seinem Strommesswiderstand dazu eingerichtet, den Stromfluss durch den Motor der Werkzeugmaschine und sein Vorzeichen zu erfassen.

Es ist im Sinne der Erfindung bevorzugt, dass die Erfassung des Stromflusses mit einer Aktivierung der H-Brücke kombiniert wird, wobei die Aktivierung der H-Brücke insbesondere durch ein Umschalten der H-Brücke erfolgt.

Vorteilhafterweise führt das Umschalten der H-Brücke dazu, dass der Strom durch den Strommesswiderstand in abwechselnder Richtung fließt. Es ist im Sinne der Erfindung bevorzugt, dass die H-Brücke Low Side-Schalter und High Side-Schalter umfasst, wobei vorzugsweise auch die Low Side-Schalter und High Side-Schalter der H-Brücke aktiviert bzw. umgeschaltet werden können. Vorzugsweise können die Low Side-Schalter und High Side-Schalter MOSFETs umfassen oder von ihnen gebildet werden. Durch die Kombination der Aktivierung der H-Brücke mit der Erfassung der Stromwerte kann vorteilhafterweise die Drehrichtung des Motors der Werkzeugmaschine und damit auch die Drehrichtung des Werkzeugs der Werkzeugmaschine hergeleitet werden, ohne dass dafür spezielle oder zusätzliche Drehzahlsensoren und/oder Drehrichtungssensoren an der Werkzeugmaschine vorgesehen sein müssen. Vorzugsweise kann die Drehrichtung des Werkzeugs durch den Vergleich des Stromflusses und seines Vorzeichens mit dem erwarteten Wert für den Stromfluss und durch eine Aktivierung der H-Brücke hergeleitet werden. Es ist im Sinne der Erfindung insbesondere bevorzugt, dass innerhalb der Werkzeugmaschine der Stromfluss durch den Motor und sein Vorzeichen erfasst und mit einem erwarteten Wert verglichen werden. Bei einer Abweichung von einem bestimmten, d.h. vorgegebenen, Betrag und/oder bei Abweichung über einen bestimmten, d.h. vorgegebenen, Zeitraum hinweg kann die Werkzeugmaschine durch ihre Motorelektronik, insbesondere den Microcontroller der Motorelektronik, deaktiviert, d.h. abgeschaltet, werden.

Mit der Umsetzung der H-Brücke und der Vier-Quadrantenregelung kann vorteilhafterweise erreicht werden, dass der Motor der Werkzeugmaschine bei der PMW-Ansteuerung eine Rotation in eine solche Richtung erfährt, die eine korrespondierende Stromflussrichtung im Motor hat bzw. hervorruft. Aufgrund der wechselnden An-/Aus-Zustände der H-Brücke bzw. ihrer Komponenten kann dadurch der Motor beschleunigt oder abgebremst werden. Es kann im Sinne der Erfindung auch bevorzugt sein, dass Energie im Wege der Rekuperation zurückgewonnen und in die Energieversorgungsvorrichtung der Werkzeugmaschine zurückgespeist wird. Es ist somit im Sinne der Erfindung bevorzugt, dass der Motorstrom in Bezug auf seinen Betrag und seine Richtung bzw. sein Vorzeichen stets gleich, d.h. im Wesentlichen unverändert, bleibt. Aufgrund der Topologie der H-Brücke, ihres Schaltverhaltens und/oder der Topologie der Elektronik der Werkzeugmaschine kann sich beispielsweise beim Beschleunigen des Motors ein positiver Strom und beim Rekuperieren ein negativer Strom durch den Shunt, d.h. den Strommesswiderstand, ergeben. Der Begriff "positiver Strom" wird im Sinne der Erfindung vorzugsweise so verstanden, dass es sich um einen Strom mit einem positiven Vorzeichen, d.h. um einen Strom größer als 0 Ampère (A) handelt. Der Begriff "negativer Strom" wird im Sinne der Erfindung vorzugsweise so verstanden, dass es sich um einen Strom mit einem negativen Vorzeichen, d.h. um einen Strom kleiner als 0 A handelt. Die Elektronik der Werkzeugmaschine bzw. die darin hinterlegten Steuerverfahren sind vorzugsweise so ausgebildet, dass die positiven und/oder negativen Ströme bei der Beschleunigung bzw. beim Abbremsen des Motors "erwartet" werden. Insbesondere sind die Elektronik und die Steuerverfahren der Werkzeugmaschine dergestalt ausgebildet, dass eine Vorzeichenumkehr zwischen "Beschleunigung" und "Abbremsen/ Rekuperation" erwartet wird. Diese "Erwartungshaltung" basiert insbesondere auf den PMW-Mustern, die in der Elektronik oder einer Steuereinrichtung der Werkzeugmaschine hinterlegt sein können. Wenn sich beispielsweise der Motor der Werkzeugmaschine - beispielsweise aufgrund von externen Einflüssen - mechanisch in die entgegengesetzte Richtung dreht, ergibt sich ein Stromfluss bzw. ein Stromfluss-Vorzeichen, das von der Elektronik oder der Steuereinrichtung der Werkzeugmaschine als "inkorrekt" interpretiert wird, dies insbesondere im Lichte der "Erwartungshaltung", die vorzugsweise auf den PMW-Mustern beruht. Der Strom, der mit dem Shunt gemessen wird, kann in beide Richtungen durch den Shunt fließen. Mit Hilfe der erfassten Stromrichtung und der bekannten Schalterstellung der Motorbrücke lässt sich vorteilhafterweise bestimmen, ob der Motor derzeit ein positives oder negatives Moment erzeugt.

Es ist im Sinne der Erfindung bevorzugt, dass die Werkzeugmaschine eine akku- und/oder batteriebetriebene Werkzeugmaschine ist. Beispielsweise kann die Werkzeugmaschine eine Gleichstrombatterie oder einen Akku als Energieversorgungsvorrichtung aufweisen.

Vorzugsweise kann die Motorelektronik der Werkzeugmaschine einen Gate-Treiberbaustein umfassen. Der Gate-Treiberbaustein ist vorzugsweise dazu eingerichtet, das Ansteuern der Schalter der H-Brücke zu erleichtern. Darüber hinaus kann mit dem Gate-Treiberbaustein überwacht werden, dass die gewünschten Schalterstellungen auch tatsächlich eingestellt werden.

In einem zweiten Aspekt betrifft die Erfindung ein Verfahren zur Erkennung einer Drehrichtung eines Werkzeugs einer Werkzeugmaschine. Die für die Werkzeugmaschine eingeführten Begriffe, Definitionen und technischen Vorteile gelten für das vorgeschlagene Verfahren analog. Das Verfahren zur Erkennung einer Drehrichtung eines Werkzeugs ist durch folgende Verfahrensschritte gekennzeichnet:
a) Betrieb der Werkzeugmaschine,
b) Erfassung eines Stromwerts und seines Vorzeichens,
c) Vergleich des Stromwerts und seines Vorzeichens mit einem erwarteten Wert für den Stromfluss,
d) Deaktivierung der Werkzeugmaschine, wenn eine Abweichung zwischen dem erfassten Stromwert und seinem Vorzeichen und dem erwarteten Wert für den Stromfluss ermittelt wird.

Es ist im Sinne der Erfindung bevorzugt, dass sich das Werkzeug der Werkzeugmaschine beim Betrieb der Werkzeugmaschine in einer vorgegebenen Drehrichtung dreht. Allerdings hat sich in der Vergangenheit gezeigt, dass auch abweichende Drehrichtungen auftreten können, was ein Risiko für den Nutzer der Werkzeugmaschine darstellt. Insofern ist es wünschenswert, die Drehrichtung des Werkzeugs der Werkzeugmaschine zu überwachen, wobei diese Aufgabe mit dem vorgeschlagenen Verfahren gelöst wird. Dabei kommt die vorgeschlagene Lösung vorteilhafterweise ohne die Verwendung von speziellen oder zusätzlichen Drehzahlsensoren und/oder Drehrichtungssensoren an der Werkzeugmaschine aus, so dass Bauraum eingespart und eine aufwändige Integration der Sensoren in die Werkzeugmaschine vermieden werden kann. Der Erfindung liegt der Grundgedanke zugrunde, dass die Drehrichtung des Werkzeugs der Werkzeugmaschine über die Erfassung des Stromflusses durch den Motor der Werkzeugmaschine ermittelt werden kann, wobei dieser Stromfluss mit einem Strommesswiderstand gemessen werden kann, der vorzugsweise Bestandteil der Motorelektronik der Werkzeugmaschine ist. Es ist mit anderen Worten im Sinne der Erfindung bevorzugt, dass die Erfassung des Stromwerts und seines Vorzeichens und/oder des Stromflusses mit einem Strommesswiederstand erfolgt. Der Vergleich des Stromwerts und seines Vorzeichens mit einem erwarteten Wert für den Stromfluss erfolgt vorzugweise in der Motorelektronik der Werkzeugmaschine, insbesondere in dem Microcontroller der Motorelektronik. Die Motorelektronik ist darüber hinaus dazu in der Lage, die Werkzeugmaschine abzuschalten, wenn eine Abweichung zwischen dem erfassten Stromwert und seinem Vorzeichen und dem erwarteten Wert für den Stromfluss ermittelt wird.

Der Begriff "Stromfluss" umfasst vorzugsweise den Wert, d.h. den Betrag des Stromflusses, sowie sein Vorzeichen. In diesem Sinne betrifft die Erfindung ein Verfahren zur Erkennung einer Drehrichtung eines Werkzeugs einer Werkzeugmaschine, wobei ein Stromfluss und sein Vorzeichen erfasst und mit einem erwarteten Wert für den Stromfluss verglichen werden und die Werkzeugmaschine deaktiviert werden kann, wenn eine Abweichung zwischen dem erfassten Stromwert und seinem Vorzeichen und dem erwarteten Wert für den Stromfluss ermittelt wird.

Vorzugsweise umfasst die Motorsteuerung der Werkzeugmaschine eine Pulsweitenmodulation, wobei ein Pulsweitenmodulations-Verhältnis für einen Pulsweitenmodulations-Zyklus verändert werden kann, um die Erfassung des Stromwerts weiter zu verbessern. Dies ist insbesondere für den Fall bedeutsam, in dem sehr unsymmetrische PMW-Verhältnisse - beispielsweise von größer oder gleich 98 % - auftreten. In diesen Fällen kann das Tastverhältnis und dadurch auch die Erfassung des Stromwerts bzw. des Stromflusses unsymmetrisch und/oder fehlerbehaftet sein. Der Microcontroller der Motorelektronik kann in diesen Fällen das Tastverhältnis in definierten zeitlichen Abständen für einen PWM-Zyklus auf ein PWM-Verhältnis verändern.

In einem Ausführungsbeispiel der Erfindung kann die Werkzeugmaschine beispielsweise mit einem PMW-Verhältnis von größer als 95 % betrieben werden. Bei einem solchen Betrieb der Werkzeugmaschine kann beispielsweise jeder tausendste Puls ein Verhältnis von 75 % aufweisen, um die Erfassung des Stroms zu ermöglichen. Dieser tausendste Puls beeinträchtigt den Betrieb der Werkzeugmaschine hinsichtlich ihrer Leistung vorteilhafterweise kaum oder im Wesentlichen gar nicht; er kann aber einen wertvollen Beitrag zur Korrektheit und Qualität der Strommessung leisten.

Dadurch können die Stromwerte und/oder die Stromflüsse vorteilhafterweise in beiden erwarteten Stromrichtungen besonders robust und fehlerarm gemessen werden.

Es ist im Sinne der Erfindung bevorzugt, dass die Änderung des Pulsweitenmodulations-Verhältnisses zyklisch wiederholt wird. Vorzugsweise können die auf diese Weise erfassten Stromwerte und/oder die Stromflüsse vom Microcontroller ausgewertet und mit erwarteten Werten für den Strom und/oder des Stromfluss verglichen werden, wobei die Werkzeugmaschine im Falle einer Abweichung abgeschaltet werden kann.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

### Es zeigen:

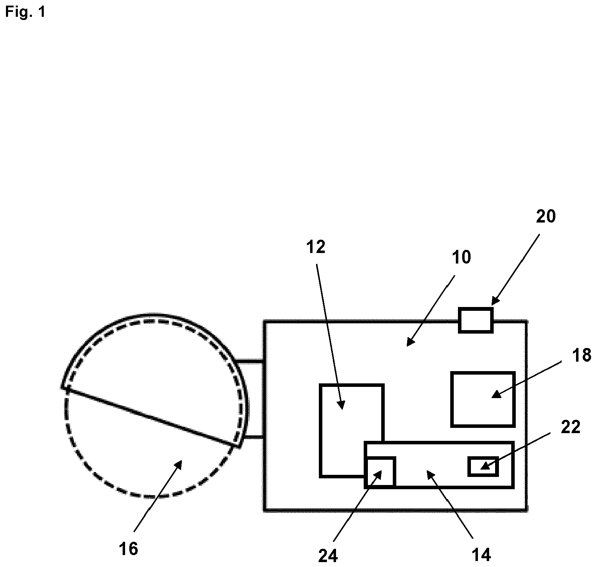

- Fig. 1: schematische Ansicht einer bevorzugten Ausgestaltung der Werkzeugmaschine

### Ausführungsbeispiele und Figurenbeschreibung:

Figur 1 zeigt eine schematische Ansicht einer bevorzugten Ausgestaltung der Werkzeugmaschine 10. Die Werkzeugmaschine 10 weist einen Motor 12 und eine Motorelektronik 14 auf. Darüber hinaus weist die Werkzeugmaschine 10 ein Werkzeug 16 auf, das vorzugsweise scheibenförmig ausgebildet ist und eine Trennscheibe oder ein Sägeblatt sein kann. Das Werkzeug 16 der Werkzeugmaschine 10 kann sich beispielsweise im Uhrzeigersinn oder gegen den Uhrzeigersinn drehen. Bei der Werkzeugmaschine 10 kann es sich um eine akkubetriebene Werkzeugmaschine 10 handeln, die mindestens einen Akkumulator 18 als Energieversorgungsvorrichtung 18 aufweisen kann. Beispielsweise kann die Energieversorgungsvorrichtung 18 von einer Gleichstrombatterie gebildet werden oder eine solche umfassen. Die Werkzeugmaschine 10 kann mit einem Schalter 20 ein- und ausgeschaltet werden.

Die Motorelektronik 14 der in Fig. 1 dargestellten Werkzeugmaschine 10 umfasst einen Microcontroller 22 und einen Strommesswiderstand 24. Der Strommesswiderstand 24 ist dazu ausgebildet, den Stromfluss durch den Motor 12 der Werkzeugmaschine 10 zu erfassen, wobei die erfassten Stromwerte und ihre Vorzeichen in dem Microcontroller 22 ausgewertet werden können. Diese Auswertung umfasst insbesondere einen Vergleich der mit dem Strommesswiderstand 24 erfassten Stromwerte mit erwarteten Stromwerten.

### Bezugszeichenliste

- 10: Werkzeugmaschine
- 12: Elektromotor
- 14: Motorelektronik
- 16: Werkzeug der Werkzeugmaschine
- 18: Energieversorgungsvorrichtung der Werkzeugmaschine, insbesondere Akku
- 20: Schalter
- 22: Microcontroller
- 24: Strommesswiderstand

## Patentansprüche

1. Werkzeugmaschine (10) umfassend einen Elektromotor (12) und eine Motorelektronik (14), sowie ein Werkzeug (16), wobei das Werkzeug (16) von dem Elektromotor (12) zu einer Rotationsbewegung antreibbar ist,
**dadurch gekennzeichnet, dass**
die Motorelektronik (14) der Werkzeugmaschine (10) dazu eingerichtet ist, einen Stromfluss durch einen Strommesswiderstand (24) zu erfassen und mit einem erwarteten Wert für den Stromfluss zu vergleichen, wobei die Motorelektronik (14) dazu eingerichtet ist, die Werkzeugmaschine (10) zu deaktivieren, wenn eine Abweichung zwischen dem erfassten Stromwert und dem erwarteten Wert für den Stromfluss ermittelt wird.

2. Werkzeugmaschine (10) nach Anspruch 1
**dadurch gekennzeichnet, dass**
die Motorelektronik (14) der Werkzeugmaschine (10) eine H-Brücke umfasst.

3. Werkzeugmaschine (10) nach Anspruch 2
**dadurch gekennzeichnet, dass**
die H-Brücke Low Side-Schalter und High Side-Schalter umfasst.

4. Werkzeugmaschine (10) nach Anspruch 2 oder 3
**dadurch gekennzeichnet, dass**
die Drehrichtung des Werkzeugs (16) durch den Vergleich des Stromflusses und seines Vorzeichens mit dem erwarteten Wert für den Stromfluss und durch eine Aktivierung der H-Brücke hergeleitet wird.

5. Werkzeugmaschine (10) nach einem der Ansprüche 2 bis 4
**dadurch gekennzeichnet, dass**
die Werkzeugmaschine (10) einen Strommesswiderstand (24) umfasst, wobei bei Umschalten der H-Brücke der Strom in abwechselnde Richtungen durch den Strommesswiderstand (24) fließt.

6. Werkzeugmaschine (10) einem der vorhergehenden Ansprüche
**dadurch gekennzeichnet, dass**
die Werkzeugmaschine (10) eine akku- und/oder batteriebetriebene Werkzeugmaschine ist.

7. Werkzeugmaschine (10) einem der vorhergehenden Ansprüche
**dadurch gekennzeichnet, dass**
eine Motorsteuerung der Werkzeugmaschine (10) eine Pulsweitenmodulation umfasst.

8. Werkzeugmaschine (10) einem der vorhergehenden Ansprüche
**dadurch gekennzeichnet, dass**
die Motorelektronik (14) der Werkzeugmaschine (10) einen Gate-Treiberbaustein umfasst.

9. Werkzeugmaschine (10) einem der vorhergehenden Ansprüche
**dadurch gekennzeichnet, dass**
die Werkzeugmaschine (10) dazu eingerichtet ist, die Drehrichtung des Werkzeugs (16) der Werkzeugmaschine (10) zu erkennen, ohne dass zusätzliche Drehzahlsensoren und/oder Drehrichtungssensoren erforderlich sind.

10. Verfahren zur Erkennung einer Drehrichtung eines Werkzeugs (16) einer Werkzeugmaschine (10) einem der vorhergehenden Ansprüche
**gekennzeichnet durch die folgenden Verfahrensschritte:**
a) Betrieb der Werkzeugmaschine (10),
b) Erfassung eines Stromwerts,
c) Vergleich des Stromwerts mit einem erwarteten Wert für den Stromfluss,
d) Deaktivierung der Werkzeugmaschine (10), wenn eine Abweichung zwischen dem erfassten Stromwert und dem erwarteten Wert für den Stromfluss ermittelt wird.

11. Verfahren nach Anspruch 10
**dadurch gekennzeichnet, dass**
die Erfassung eines Stromwerts und seines Vorzeichens mit einem Strommesswiderstand (24) erfolgt.

12. Verfahren nach Anspruch 10 oder 11
**dadurch gekennzeichnet, dass**
eine Motorsteuerung der Werkzeugmaschine (10) eine Pulsweitenmodulation umfasst, wobei ein Pulsweitenmodulations-Verhältnis für einen Pulsweitenmodulations-Zyklus verändert wird.

13. Verfahren nach Anspruch 12
**dadurch gekennzeichnet, dass**
die Änderung des Pulsweitenmodulations-Verhältnisses zyklisch wiederholt wird.

14. Verfahren nach einem der Ansprüche 10 bis 13
**dadurch gekennzeichnet, dass**
die Werkzeugmaschine (10) eine H-Brücke und einen Strommesswiderstand (24) umfasst, wobei bei Umschalten der H-Brücke der Strom in abwechselnde Richtungen durch den Strommesswiderstand (24) fließt.
